(19) Europäisches Patentamt
European Patent Office
Office européen des brevets

(11) **EP 1 935 735 A1**

(12) **EUROPEAN PATENT APPLICATION**

(43) Date of publication:
**25.06.2008 Bulletin 2008/26**

(51) Int Cl.:
**B60T 13/66** (2006.01)          **B60T 13/74** (2006.01)
**F16D 65/14** (2006.01)

(21) Application number: **07124002.2**

(22) Date of filing: **21.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **22.12.2006 IT MI20062496**

(71) Applicant: **STMicroelectronics S.r.l.**
**20041 Agrate Brianza (Milano) (IT)**

(72) Inventors:
• **Vitali, Andrea Lorenzo**
 **24123 Bergamo (IT)**
• **Cesario, Nicola**
 **I-80022 Arzano (NA) (IT)**

(74) Representative: **Pezzoli, Ennio et al**
**Maccalli & Pezzoli S.r.l.**
**Via Settembrini 40**
**20124 Milano (IT)**

(54) **Control system for braking devices based on a braking couple sensor**

(57)    A control system (190) of a braking device (180) is provided. Said braking device includes at least one braking element (203, 405, 410) adapted to apply a braking action (Tb) to a moving body (140, 205). The control system includes receiving means (310) for receiving an indication of a target value of the braking action to be applied to the moving body, measuring means (320, 330) for measuring an indication of an actual value of the braking action applied to the moving body and driving means (320) for driving the braking element according to a comparison between the target value and the actual value. The measuring means includes sensing means (330) for sensing a warping of at least one part of the moving body and/or of the braking device, and logic means (320) for estimating the actual value according to the warping.

FIG.5b

**Description**

The present invention generally relates to the field of the brakes. In particular, the present invention refers to the control of braking devices.

The braking devices - or more simply, brakes - are mechanical members, which are aimed at slowing down a moving member or keep it still. The so-called "standing brakes" are brakes, the specific aim of which is the maintenance of the rest of a given member. The brakes aimed at slowing down and controlling the speed of a moving member are instead labelled by the term "exertion brakes". An example of standing brake is given by the hand brake of a vehicle, which has the function of keeping the wheels locked when the vehicle is parked. An example of exertion brake is instead provided by the foot brake that acts on the same wheels when the vehicle is moving.

Making reference in particular to the exercise brakes for vehicles, a disk brake comprises a caliper associated with a braking disk integral to a wheel, and a driving hydraulic circuit. The caliper houses therein pads (generally in number equal to two) made up of friction material, and one or more pistons connected to the driving hydraulic circuit. Following an action exerted by a user of the vehicle on a proper pedal (the brake pedal), a pump in the driving hydraulic circuit applies pressure to a fluid contained in this circuit. Accordingly, the pistons come out from respective seats to press the corresponding pads against the braking disk surface, in such a way to exert a braking action on the wheel.

Recently, electronic control braking devices have been proposed, which provide the replacement of the hydraulic calipers with actuators of electro-mechanical type. In detail, proper sensors sense the actuation of the brake pedal, and generate corresponding electric signals, which are received and interpreted by a control system. The control system then regulates the intervention of the electro-mechanical actuators (for example, pistons driven by an electric motor) that exert the desired braking action on the braking disks through the corresponding pads. The control system further comprises a system of sensors associated with the braking device, which provides information about the braking action actually exerted by the electro-mechanical actuators. In this way it is possible to control the braking action by means of a closed-loop feedback. In particular, the control system receives, from the sensor system, information on the pressure exerted by each actuator on the respective braking disk; that information is used for deducing the actual trend of the braking action in progress. For this purpose, the action of the pistons of each braking device is monitored by pressure sensors, for example, based on a steel core with "strain gauge" elements or realized by means of integrated structures.

However, a solution of this type does not permit to control the braking action in an optimal way, since what is monitored is only a physical quantity related to the braking action in an indirect way. Therefore, by means of such an indirect measure (*i.e.,* the pressure exerted by each actuator on the respective braking disk) it is not possible to obtain the actual braking action precisely (that is, the braking couple generated by the friction between the pads and the disk). In fact, the degree of such a braking action does not depend exclusively on the pressure that each piston exerts on the braking disk, but it also depends on other different factors. For example, the generated braking action greatly depends on the wear conditions of the pads and of the braking disks, on the presence of extraneous fluids, such as, for example, oil on the surface of the braking disks that is in contact with the pads, and on the temperature of the pads. Accordingly, at the same measured pressure between pistons and braking disk, the braking action exerted on the corresponding wheel - that is, the resulting braking couple exerted by the pads on the braking disk - can vary in an unpredictable way by a not negligible amount, depending on all the factors cited above.

Accordingly, once the user of the vehicle has set the desired braking action by means of a proper working of the brake pedal, by using the known braking devices and control systems, it is not possible to control the braking action that is actually occurring in an effective way.

In its general terms, the present disclosure is based on the idea of measuring the actual braking action.

Particularly, different aspects of the invention provide a solution as set out in the independent claims. Advantageous embodiments of the invention are set out in the dependent claims.

In particular, an aspect of the present invention provides a control system of a braking device. The braking device includes at least one braking element for applying a braking action to a moving body. The control system includes receiving means for receiving an indication of a target value of the braking action to be applied to the moving body, measuring means for measuring an indication of an actual value of the braking action applied to the moving body and driving means for driving the braking element according to a comparison between the target value and the actual value. The measuring means includes sensing means for sensing a warping of at least one part of the moving body and/or of the braking device, and logic means for estimating the actual value according to the warping.

In a specific implementation of the invention, the sensing means senses the warping of the braking device.

According to an embodiment of the invention the braking action is a braking couple opposing the rotation of a wheel.

In an embodiment of the invention the braking device is of disk type.

Preferably, the sensing means senses the warping of a caliper system of the disk braking device.

In a specific embodiment of the invention the sensing means comprises a piezoresistive element.

Another aspect of the invention provides a braking apparatus including at least one corresponding braking device.

A further aspect of the invention relates to a vehicle that includes such a braking apparatus.

Another aspect of the invention provides a corresponding method for controlling a braking device.

A further aspect of the invention provides a program for performing this method.

The invention itself, as well as further features and the advantages thereof, will be best understood with reference to the following detailed description, given purely by way of a non-restrictive indication, to be read in conjunction with the accompanying drawings. In this respect, it is expressly intended that the figures are not necessary drawn to scale and that, unless otherwise indicated, they are merely intended to conceptually illustrate the structures and procedures described herein. In particular:

Figure 1 illustrates in a schematic way the main constitutive parts of a vehicle in which a braking apparatus according to an embodiment of the present invention can be used;
Figure 2 illustrates in greater detail the structure of a braking device included in the vehicle of Figure 1;
Figure 3 shows a block diagram of the braking apparatus included in the vehicle of Figure 1 according to an embodiment of the invention;
Figure 4 shows a cross-section view of the braking device of Figure 2 according to an embodiment of the invention; and
Figures 5 a and 5b show a further cross-section view of the braking device of Figure 2 during two different operation phases.

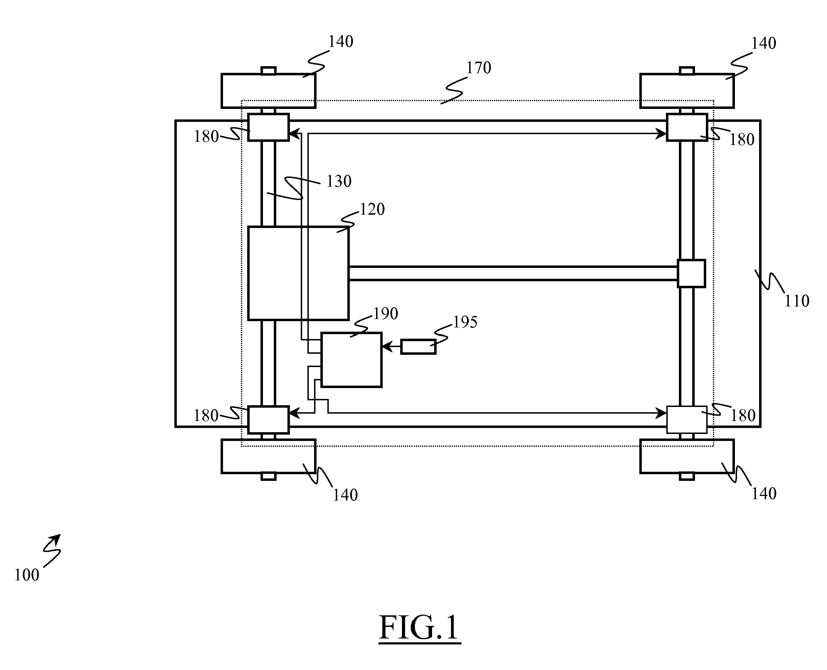

With reference to Figure 1, some among the main constitutive parts of a vehicle 100 - for example a car - are schematically illustrated. In particular, in Figure 1 there is pointed out the presence of a chassis 110, which constitutes the supporting structure of the vehicle 100; all the other main parts of the vehicle 100 are connected to the chassis 110. In the car models of nowadays, the supporting function of the chassis 110 is substituted by the car body (in this case it is indicated as supporting car body). The vehicle 100 includes an engine 120, adapted to transform the chemical energy of the fuel that feeds it into mechanical work; a transmission system 130 transmits the mechanical work produced by the engine 120 to wheels 140 - each one generally made up of a metal ring on which a pneumatic is mounted - by means of proper gearing-down systems. The vehicle 100 further includes a drive system (not illustrated in the Figure), mainly consisting of a steering wheel connected to a steering device for determining the contemporaneous change of direction of the wheels 140. A braking apparatus 170 is aimed at slowing down the rotation of the wheels 140 or keeping them still.

In particular, the braking apparatus 170 includes a braking device 180 associated with each wheel 140; a control system 190 manages the braking devices 180 according to an action exerted on a brake pedal 195 by a user of the car.

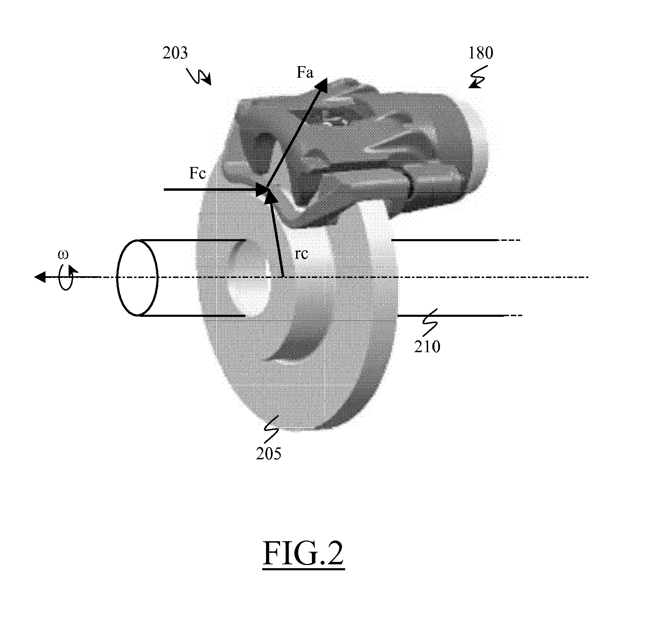

In Figure 2 the structure of one of the braking devices 180 is illustrated in greater detail. In particular, the braking device 180 is an Electro-Mechanical Brake (EMB) comprising a caliper 203 consisting of an actuator of electro-mechanical type, which will be described in greater detail in the following of the present description.

A braking disk 205 is mounted on a transmission shaft 210 that is connected to a hub of the wheel (not illustrated). The braking disk 205 then rotates in a way integral to the corresponding wheel.

When the vehicle is moving, the caliper 203 is not in contact with the surfaces of the braking disk 205, which is then free to rotate integrally to the wheel at an angular speed ω. If the user of the vehicle decides to slow down the vehicle speed, s/he acts on the brake pedal, for operating the braking apparatus accordingly. The control system of the braking apparatus drives the braking device 180 to cause the closing of the caliper 203 on the braking disk 205. As soon as the caliper 203 is in contact with the surfaces of the braking disk 205, a friction force is generated and originates a braking couple opposing the rotation of the braking disk 205 - and, then, the rotation of the wheel. In particular, a force *Fc* exerted by the caliper 203 on each one of the two surfaces of the braking disk 205, having a direction parallel to the rotation axis of the braking disk 205 (only one of which shown in the Figure), generates a corresponding friction force *Fa,* having a direction perpendicular to that of the force *Fc,* a direction that opposes the rotation of the braking disk 205 and a modulus equal to:

$$Fa = \mu_c(\omega r_c, T)Fc,$$

where $\mu_c(\omega r_c, T)$ is the friction coefficient between the caliper 203 and the braking disk 205. The friction coefficient $\mu_c(\omega r_c, T)$ depends on the temperature T of the caliper 203 and of the braking disk 205, and on the difference between the speed of the braking disk 205 in the caliper/disk contact point- that is, $\omega r_c$, where $r_c$ is the distance of the caliper/disk contact point from the centre of the braking disk - and the speed of the caliper 203 - that is, null. Furthermore, the friction coefficient $\mu_c(\omega r_c, T)$ depends on numerous other factors measurable with difficulty, which are, for example, related to the conditions of the materials making up the caliper and the disk.

The friction force *Fa* originates a braking action (a braking couple) Tb, which opposes the angular speed ω, and the modulus of which is equal to

$$Tb = r_c\, Fa = r_c\, \mu_c(\omega r_c, T)Fc.$$

As it can be observed in the previous equation, and according to what said in the introductory part of the present document, also the braking action generated by the braking device 180 does not depend only on the force *Fc* exerted by the caliper 203 on the two surfaces of the braking disk 205, but it depends also on the other parameters mentioned above.

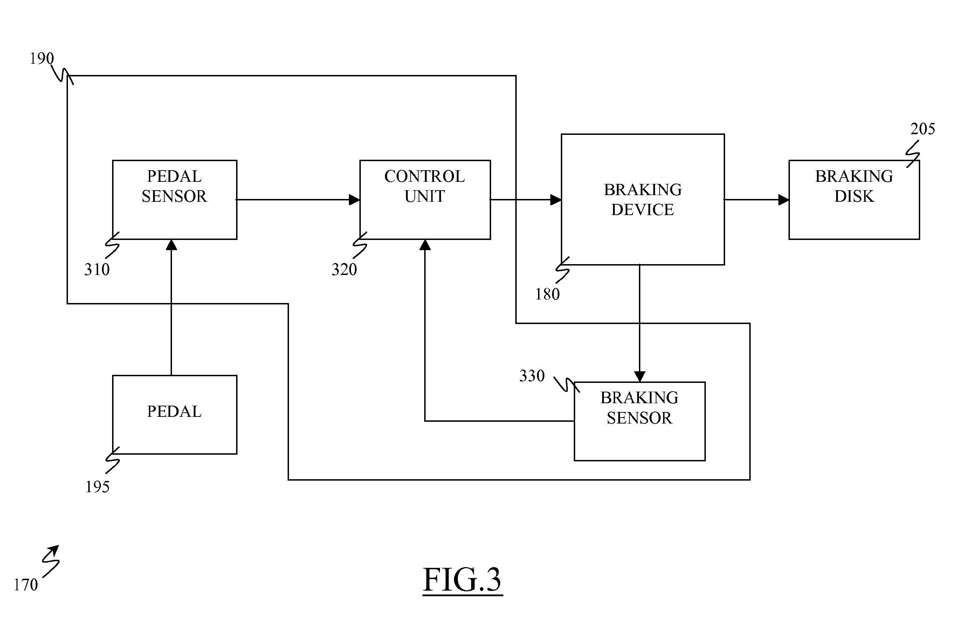

Figure 3 shows a block diagram of the braking apparatus 170 that describes the logic operation thereof. As previously anticipated, the braking apparatus 170 comprises the brake pedal 195, a braking disk 205 for each wheel, a braking device 180 associated with each braking disk 205, and the control system 190 adapted to control the braking devices 180. For convenience of viewing, in Figure 3 only one braking device 180 and one braking disk 205 are illustrated.

The control system 190 includes sensors of the brake pedal 310 adapted to sense the stroke and the actuation speed of the brake pedal 195. An electronic control unit 320 is connected to the sensors of the brake pedal 310 for operating the braking device 180. Preferably, the electronic control unit 320 is realized with a device programmable by means of a proper firmware.

In the proposed solution according to an embodiment of the invention, the control system 190 includes braking sensors 330, adapted to sense the braking action exerted by the braking device 180 on the braking disk 205, which are feedback-connected to the electronic control unit 320.

In operation, the sensors of the brake pedal 310 send data related to the stroke and to the actuation speed of the brake pedal 195 to the electronic control unit 320; in accordance with such data, the electronic control unit 320 generates a command signal for the braking device 180 that indicates the desired value of the braking action. The braking device 180 drives the corresponding caliper as a result of such a command signal, exerting a corresponding braking action on the braking disk 205. The braking sensors 330 sense the braking action actually exerted by the caliper on the braking disk 205, and they feedback such data to the electronic control unit 320. In such a way the electronic control unit 320 exerts a closed-loop control of the braking action, executing a continuous comparison between the desired braking action (target braking action) and that actually exerted by the caliper (actual braking action).

Thanks to this type of solution, it is possible to control the braking action in an optimal way. In fact, unlike the known systems - in which only a physical quantity related to the braking action is monitored in an indirect way- the provided control system 190 permits to monitor and directly control the actual braking action that is exerted by the caliper 203. In this way the control is greatly more effective, since it is no more subject to the errors due to possible wrong estimations caused by external factors. A solution of this type is possible thanks to the presence of the braking sensors 330, the structure of which will be described and analysed in greater detail in the following of the present description.

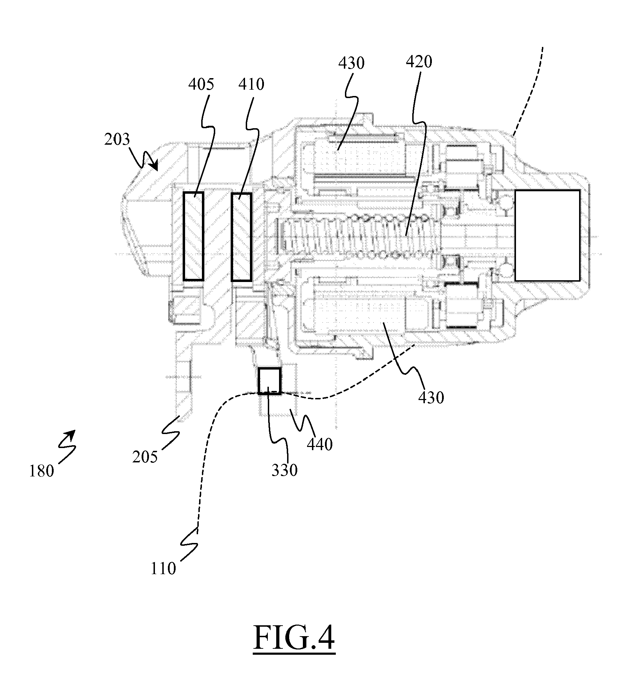

With the aim of explaining the operation of the braking device 180 reference is made now to Figure 4, which shows such a braking device in a cross section along a cross-section plane crossing the rotation axis of the braking disk 205. The elements corresponding to those illustrated in Figure 2 are identified by the same reference numerals, and the explanation thereof is omitted in order to not make heavier the description.

The caliper 203 of the braking device 180 includes a pair of pads of abrasive material, formed by an external pad 405 - located in proximity of the side of the braking disk 205 in front of the wheel - and by an internal pad 410 - located in proximity of the other side of the braking disk 205. The pads 405, 410 are coupled with an electro-mechanical actuator comprising a piston 420 that is able to run along a direction perpendicular to the surface of the braking disk 205 and an electric motor 430 - for example, a brushless motor. In accordance with the command signal generated by the electronic control unit of the control system (not shown in the Figure), the electric motor 430 generates a driving torque that is transformed in a linear movement of the piston 420 by means of proper mechanical members. The braking device 180 is of floating disk type. In particular, the braking disk 205 is free to move along the direction of its axis, and then it is integral to the corresponding wheel only in rotation. Furthermore, the internal pad 410 is connected directly to the piston 420, while the external pad 405 as well is free to move along the direction of the braking disk axis. The braking device 180 is fastened to the vehicle chassis 110 by means of constraint supports 440. In an embodiment of the present invention, the braking sensors 330 are connected to the constraint supports 440.

When the braking device 180 is driven by the control system, the electric motor 430 brings the piston 420 in movement. In this way the piston 420 and the internal pad 410 connected thereto are driven in contact with the braking disk 205. Exploiting the freedom of movement of the braking disk 205 in the direction of the rotation axis, the piston 420 and the internal pad 410 push the braking disk 205 against the external pad 405. In this way, a friction force is generated and originates a braking couple that opposes the rotation of the braking disk 205, as already explained previously.

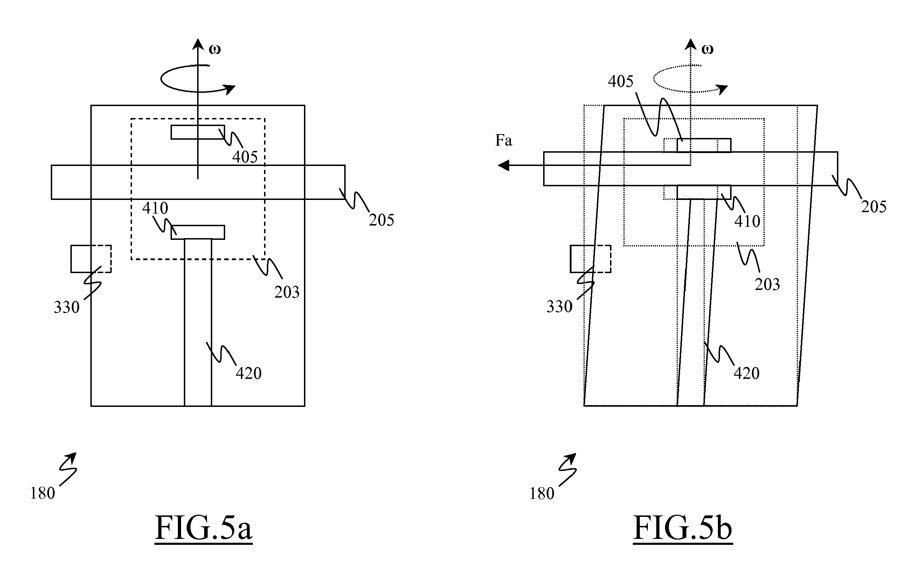

Figures 5a and 5b show the braking device 180 in a cross section along a cross-section plane perpendicular to that used for cross-sectioning the braking device 180 of Figure 4. In order to make clearer the operation of the braking device 180 according to an embodiment of the invention, Figures 5 a and 5b have been realized with a degree of detail greatly lower than that used in Figure 4. The elements corresponding to those illustrated in Figure 4 are identified with the same reference numerals.

In particular, Figure 5a shows the braking device 180 when the caliper 203 is open, and the pads 405, 410 are not in contact with the surfaces of the braking disk 205. In these conditions, the braking disk 205 is free to rotate at the angular speed ω.

Figure 5b instead shows the same braking device 180 when the caliper 203 is closed on the braking disk 205, and the pads 405, 410 are in close contact with the surfaces of the latter. As already described in detail with reference to Figure 2, the contact of the caliper 203 with the surfaces of the braking disk 205 originates the friction force *Fa,* the direction of which is such that it opposes the rotation direction of the braking disk 205. A further effect originated by the closing of the caliper 203 that has not been considered up to now is given by the dragging action that the braking disk 205 carries out on the caliper 203. While the braking disk 205 is braked by means of the friction force *Fa,* the caliper 203 of the braking device 108 tends to be dragged in the rotation direction of the braking disk 205. Such a dragging effect greatly depends on the degree of the friction force *Fa:* for the same angular speed ω, the greater the friction force *Fa* generated by the closing of the caliper 203, the greater the intensity of the dragging effect. Since the caliper 203, and, more generally, the braking device 180, are fastened to the vehicle chassis by means of the constraint supports, the dragging effect of the braking disk 205 originates a warping of the block caliper/braking device 203,180. In particular, the caliper 203 and the braking device 180 undergo a torsional warping in agreement with the rotation direction of the braking disk 205, as illustrated in Figure 5b (for the sake of clarity of illustration, the effect of such a warping has been exaggerated with respect to reality).

The torsional warping that the caliper 203 and the braking device 180 undergo directly depends on the braking action that the caliper 203 actually exerts on the braking disk 205. In fact, the warping directly depends on the friction force *Fa,* which is in turn directly related to the braking action *Tb,* as previously described. In other words, the actual braking action Tb directly depends on the warping that the caliper 203 and the braking device 180 undergo. In this way, by means of a measure of the warping a reliable estimation of the actual braking action *Tb* is obtained, which automatically considers the dependence on the friction coefficient between the caliper 203 and the braking disk 205.

For this purpose, according to an embodiment of the present invention, the braking sensors 330 connected to the constraint supports are adapted to measure the degree of the torsional warping which both the caliper 203 and the braking device 180 as a whole undergo. For example, such braking sensors 330 may include some piezoresistances, transducer elements able to provide an electric signal proportional to the warping that they undergo. In use, the braking sensors 330 sense such a warping, thus deducing the braking action actually exerted by the braking device 180 on the braking disk 205 and providing such an information in feedback to the electronic control unit, as previously described. For example, the actual braking action depends linearly on the warping, according to a proportionality coefficient depending on the structure of the braking device 180 - that can be determined through experimental measures.

Naturally, in order to satisfy local and specific requirements, a person skilled in the art may apply to the solution described above many logical and/or physical modifications and alterations. More specifically, although the present invention has been described with a certain degree of particularity with reference to preferred embodiment(s) thereof, it should be understood that various omissions, substitutions and changes in the form and details as well as other embodiments are possible. Particularly, the proposed solution may even be practiced without the specific details (such as the numerical examples) set forth in the preceding description to provide a more thorough understanding thereof; conversely, well-known features may have been omitted or simplified in order not to obscure the description with unnecessary particulars. Moreover, it is expressly intended that specific elements and/or method steps described in connection with any disclosed embodiment of the invention may be incorporated in any other embodiment as a matter of general design choice.

For example, similar considerations apply if the braking device has a different structure or includes equivalent elements. Analogously, it is possible to sense the desired braking action for driving the braking element in another way. Furthermore, it is possible to use any other system for evaluating the actual braking action.

In any case, it is possible to sense any other type of warping (of the braking device as a whole or of a part thereof), for example, a simple bending; analogously, the actual braking action can be evaluated through different formulas (for example, of logarithmic type), or on the basis of two or more measured values of the warping.

Furthermore, the sensing of the warping of the moving body instead of that of the braking device is not excluded.

Although in the previous description the moving body comprises a rotating wheel, nothing prevents applying the concepts of the present invention to braking devices for bodies that move in other ways (for example, to bodies that do not rotate but only translate).

Although reference has expressly been made in the foregoing to braking devices of the disk type, and in greater detail to floating disk and electronic control braking devices, the concepts of the present invention may be applied to other types of brakes - such as, for example, to the ribbon and drum brakes, brakes with not floating disk, hydraulic disk brakes, and so on.

Nothing prevents sensing the warping of any other element of the braking device (in addition or in replacement of the calipers).

For sensing the warping, it is not excluded the possibility of using sensing means different from the piezoresistances - such as, for example, "strain gauges" devices with metal or semiconductor core.

Analogous considerations apply if the braking apparatus has an equivalent structure (for example, with any number of braking devices, down to only one) or if it comprises another unit (for example a control system dedicated to each braking device).

The provided solution lends itself to be used in any vehicle (for example, a motorcycle).

In any case, nothing prevents from sensing the warping of elements integral to any other structure that does not follow the rotation of the wheel.

The provided solution lends itself to be implemented with an equivalent method (using similar steps, removing some non-essential steps, or adding further optional steps - also in different order).

In any case, the managing program of the control unit may take any form suitable to be used by any data processing system, such as software, firmware, or microcode. Moreover, it is possible to provide the program on any computer-usable medium. For example, the medium may be of the electronic, magnetic, optical, electromagnetic, infrared, or semiconductor type. In any case, the solution according to an embodiment of the present invention lends itself to be implemented with a hardware structure (for example, integrated in a chip of semiconductor material), or with a combination of software and hardware.

**Claims**

1. A control system (190) of a braking device (180), said braking device including at least one braking element (203, 405, 410) adapted to apply a braking action *(Tb)* to a moving body (140, 205), wherein the control system includes:

   receiving means (310) for receiving an indication of a target value of the braking action to be applied to the moving body,
   measuring means (320, 330) for measuring an indication of an actual value of the braking action applied to the moving body,
   driving means (320) for driving the braking element according to a comparison between the target value and the actual value,

   **characterized in that**
   the measuring means includes sensing means (330) for sensing a warping of at least one part of the moving body and/or of the braking device, and logic means (320) for estimating the actual value according to the warping.

2. The control system (190) of claim 1, wherein the sensing means (330) is adapted to sense the warping of at least one part of the braking device (180).

3. The control system (190) of claim 2, wherein the moving body (140, 205) includes a rotating wheel (140) and the braking action consists in the generation of a braking couple *(Tb)* in opposition to the rotation of the wheel.

4. The control system (190) of claim 3, wherein the moving body (140, 205) includes at least one disk (205) rotating integrally to the wheel (140), the braking device (180) being of the disk type and including:

   at least one caliper system (203) supporting at least one piston (420) coupled with a corresponding braking element (405, 410) for pushing the braking element against the disk, said braking couple (Tb) being generated by means of the friction force between each braking element and the disk.

5. The control system (190) of claim 4, wherein the sensing means (330) is adapted to sense the warping of the at least one caliper system (203).

6. The control system (190) of claim 5, wherein the sensing means (330) includes at least one piezoresistive element.

7. A braking apparatus (170) comprising:

   at least one braking device (180) including at least one braking element (203, 405, 410) adapted to apply a braking action (*Tb*) to a moving body (140, 205);
at least one control system (190) according to any one among the preceding claims for controlling the at least one braking device; and
setting means (190, 195) for setting the target value of the braking action of each braking device.

**8.** A vehicle (100) comprising a chassis (110), at least one wheel (140) mounted on the chassis, and the braking apparatus (170) of claim 7, each braking device (180) of the braking apparatus being adapted to brake a corresponding wheel.

**9.** The vehicle (100) of claim 8 when the control system (190) is according to any of claims 4 to 6, wherein the caliper system (203, 405, 410) of each braking device (180) is integral to the chassis (110).

**10.** A method for controlling a braking device (180), said braking device including at least one braking element (203, 405, 410) adapted to apply a braking action *(Tb)* to a moving body (140, 250), wherein the method includes the following steps:

- receiving an indication of a target value of the braking action to be applied to the moving body;
- measuring an indication of an actual value of the braking action applied to the moving body;
- driving the braking element according to a comparison between the target value and the actual value,

**characterized in that** it further includes the following steps:

- sensing a warping of at least one part of the moving body and/or of the braking device, and
- estimating the actual value of the braking action according to the warping.

**11.** A computer for performing the method of claim 10 when the program is executed on a programmable control device (190).

FIG.1

FIG.2

FIG.3

EP 1 935 735 A1

**FIG.4**

FIG.5b

FIG.5a

**European Patent Office**

**EUROPEAN SEARCH REPORT**

Application Number

EP 07 12 4002

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 095 834 A (TOYOTA MOTOR CO LTD [JP]; DENSO CORP [JP]) 2 May 2001 (2001-05-02) * paragraphs [0068], [0069], [0077]; figure 1 * | 1-11 | INV. B60T13/66 B60T13/74 F16D65/14 |
| X | US 6 008 604 A (MAISCH WOLFGANG [DE]) 28 December 1999 (1999-12-28) * column 2, lines 14-19; figure 1 * | 1-11 | |
| X | US 4 784 244 A (CARRE JEAN-JACQUES [FR] ET AL) 15 November 1988 (1988-11-15) * column 3, lines 13-15; figure 1 * | 1-11 | |
| X | EP 1 482 290 A (DELPHI TECH INC [US]) 1 December 2004 (2004-12-01) * the whole document * | 1-11 | |

TECHNICAL FIELDS SEARCHED (IPC)

B60T
F16D

The present search report has been drawn up for all claims

| Place of search | Date of completion of the search | Examiner |
|---|---|---|
| Munich | 25 April 2008 | Dekker, Wouter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 935 735 A1

## ANNEX TO THE EUROPEAN SEARCH REPORT
## ON EUROPEAN PATENT APPLICATION NO.

EP 07 12 4002

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2008

| Patent document cited in search report | | Publication date | Patent family member(s) | | Publication date |
|---|---|---|---|---|---|
| EP 1095834 | A | 02-05-2001 | JP | 3740005 B2 | 25-01-2006 |
| | | | JP | 2001191903 A | 17-07-2001 |
| | | | US | 6607253 B1 | 19-08-2003 |
| US 6008604 | A | 28-12-1999 | WO | 9703869 A1 | 06-02-1997 |
| | | | DE | 19526645 A1 | 23-01-1997 |
| | | | EP | 0840683 A1 | 13-05-1998 |
| | | | ES | 2135887 T3 | 01-11-1999 |
| | | | JP | 11509158 T | 17-08-1999 |
| US 4784244 | A | 15-11-1988 | DE | 3671945 D1 | 19-07-1990 |
| | | | EP | 0223704 A1 | 27-05-1987 |
| | | | FR | 2590219 A1 | 22-05-1987 |
| | | | JP | 2657913 B2 | 30-09-1997 |
| | | | JP | 62127533 A | 09-06-1987 |
| EP 1482290 | A | 01-12-2004 | FR | 2855610 A1 | 03-12-2004 |

EPO FORM P0459

For more details about this annex : see Official Journal of the European Patent Office, No. 12/82